# FASCICULE DE BREVET EUROPEEN

(11) **EP 3 002 155 B1**
(45) Date de publication et mention de la délivrance du brevet: **18.01.2023**
(21) Numéro de dépôt: 15187444.3
(22) Date de dépôt: 29.09.2015
(51) Int. Cl.: B60Q 3/64, B60Q 3/82

(54) **DISPOSITIF D'ÉCLAIRAGE D'UN HABITACLE DE VÉHICULE AUTOMOBILE**
BELEUCHTUNGSVORRICHTUNG FÜR EINEN INNENRAUM EINES KRAFTFAHRZEUGS
LIGHTING DEVICE FOR A PASSENGER COMPARTMENT OF A MOTOR VEHICLE

(30) Priorité: 02.10.2014 FR 1459447
(43) Date de publication de la demande: 06.04.2016
(73) Titulaire: VALEO VISION, 93012 Bobigny Cedex (FR)
(72) Inventeur: LETOUMELIN, Rémi, 77700 CHESSY (FR)
(74) Mandataire: Valeo Visibility

(56) Documents cités:
- EP-A1- 2 845 771
- JP-A- 2005 231 518
- US-A1- 2004 057 246
- US-A1- 2006 097 291
- US-A1- 2007 211 483
- US-A1- 2011 198 995

## Description

L'invention concerne les dispositifs adaptés à éclairer l'habitacle intérieur d'un véhicule automobile.

De façon connue, des dispositifs d'éclairage de l'habitacle d'un véhicule automobile comportent une source lumineuse et une interface de commande de la source lumineuse. Il est en outre depuis peu connu d'utiliser une interface tactile de commande réalisée sous la forme d'une plaque munie de capteurs de sorte qu'un contact sur cette plaque commande l'allumage ou l'extinction de la source lumineuse.

Or, dans de tels dispositifs, la plaque est montée via des moyens de montage sur un support de montage, lui-même monté dans l'habitacle. Par conséquent, les dispositifs connus nécessitent des moyens de montage de la plaque sur son support de montage, ce qui engendre une perte de compacité du dispositif et un coût de fabrication supplémentaire.

Le document US 2007/211483 A1 propose de monter l'interface tactile par l'intermédiaire des capteurs.

Par ailleurs, la plaque est soumise à des contraintes inhérentes au véhicule automobile telles ques des vibrations, des secousses ou encore à des changements d'assiette. Il a été constaté que ces contraintes viennent compromettre la précision de la détection des contacts par les capteurs de la plaque, et en particulier lorsque la plaque présente un profil courbé.

Il existe donc un besoin pour un dispositif d'éclairage d'un habitacle de véhicule à commande tactile qui puisse offrir des performances optimales face aux contraintes inhérentes au véhicule, tout en étant compact et facile à produire.

La présente invention se place dans ce contexte et a pour objet de proposer un dispositif d'éclairage d'un habitacle de véhicule automobile selon la revendication 1.

Le dispositif selon l'invention est remarquable en ce que l'interface tactile est montée sur le support de montage par l'intermédiaire des moyens capteurs.

D'une part, grâce à l'invention, les moyens capteurs forment des moyens de montage de l'interface tactile sur le support de montage. Il est ainsi possible de s'affranchir de moyens de montage, ce qui permet d'améliorer la compacité du dispositif tout en réduisant son coût de fabrication.

D'autre part, les moyens capteurs subissent les mêmes contraintes que l'interface tactile, ce qui permet de prendre en compte ces contraintes et donc d'améliorer la précision de la détection des contacts sur la plaque.

Les moyens capteurs peuvent par exemple être des capteurs agencés pour détecter une déformation de l'interface tactile et générer des données relatives à la présence de cette déformation et éventuellement relatives à des caractéristiques associées à cette déformation, comme par exemple son intensité ou sa récurrence. Par exemple, les moyens capteurs peuvent être de type capacitifs ou en variante résistifs.

Avantageusement, le dispositif selon l'invention comprend au moins un contrôleur apte à recevoir des données générées par les moyens capteurs, à compiler ces données pour déterminer la zone de contact sur l'interface tactile, et à envoyer à la source lumineuse, en fonction de la zone de contact, des instructions d'allumage et/ou d'extinction et/ou de changement d'intensité et/ou de couleur de cette source lumineuse.

La méthode de calcul utilisé par le contrôleur peut notamment consister en un calcul de barycentre. Par exemple, le contrôleur peut donner à chaque mesure effectué par l'un des moyens capteurs une pondération correspondante à la valeur de déformation de l'interface tactile enregistrée par ces capteurs. Une fois ce calcul effectué et la position du contact estimée, le contrôleur est avantageusement programmé pour comparer cette position avec les données géométriques de l'interface tactile enregistrées dans la mémoire du contrôleur. Si la comparaison amène le microprocesseur à estimer que le contact a eu lieu dans une zone prédéterminée de l'interface tactile, le microprocesseur génère une instruction d'allumage de la source lumineuse.

Selon l'invention, le dispositif comporte au moins trois moyens capteurs aptes à bloquer des mouvements de l'interface tactile sur son support de montage selon une première direction. Cette première direction est de préférence la direction principale selon laquelle l'interface tactile se déforme lors d'un contact. Par exemple, la première direction est orthogonale à l'interface tactile. L'interface tactile étant bloquée dans la direction principale des déformations provoquées par les contacts, on s'assure ainsi que seul une déformation liée à un contact donnera lieu à une détection d'un contact par le contrôleur et on évite ainsi des fausses détections pouvant être provoquées par des contraintes inhérentes au comportement du véhicule. Si on le souhaite, l'interface tactile présente quatre bords et le dispositif comporte quatre moyens capteurs, par exemple disposés chacun à un bord de l'interface tactile, ou en variante, chacun disposés à un coin de l'interface.

Selon un mode de réalisation de l'invention, au moins l'un des moyens capteurs est en outre apte à bloquer des mouvements de l'interface tacile sur son support de montage selon des deuxième et troisième directions orthogonales entre elles et à la première direction. On garantit ainsi, grâce à ce moyen capteur, l'isostatisme de l'interface tacile vis-à-vis du support de montage et on peut alors s'affranchir de tout moyen de montage supplémentaire.

Selon un autre mode de réalisation de l'invention, le dispositif comporte en outre au moins un moyen de blocage de mouvements de l'interface tactile sur son support de montage selon des deuxième et troisième directions orthogonales entre elles et à la première direction. Avantageusement, le moyen de blocage comporte au moins une lame flexible fixée à la fois à l'interface tactile et au support de montage. Par exemple, la lame flexible peut être fixée à un bord de l'interface tactile via une portion centrale de la lame et au support de montage via chacune de ses extrémités.

Avantageusement, au moins un ou chaque moyen capteur comporte une glissiere dans laquelle est inséré une portion périphérique de l'interface tactile. Si on le souhaite, la portion périphérique peut être un coin de l'interface tactile. Avantageusement encore, la ou chaque portion périphérique comporte un bossage agencé pour venir au contact et déformer une paroi de la glissière dans laquelle elle est insérée. En variante, la ou chaque portion périphérique peut comporter une nervure. De préférence, la ou chaque portion périphérique comporte un bossage supérieur agencé pour venir au contact et déformer une paroi supérieure de la glissière et un bossage inférieur agencé pour venir au contact et déformer une paroi inférieure de la glissière. Grâce au bossage, on garantit de manière fiable le blocage de l'interface tactile sur son support de montage selon la première direction.

Selon une caractéristique de l'invention, le ou chaque moyen capteur comporte un boîtier dans lequel est disposée sa glissière, ce moyen capteur comportant un capteur inférieur disposé entre la glissière et une paroi inférieure du boîtier. Avantageusement, le capteur inférieur est disposé de sorte à venir en contact à la fois avec la glissière et la paroi inférieure. Si on le souhaite, le capteur inférieur peut comporter un circuit imprimé flexible comprenant des moyens de détection d'une déformation sur l'interface tactile. Par exemple, le circuit imprimé flexible peut comporter deux électrodes et supporter un diélectrique. Le cas échéant, le circuit imprimé flexible est replié sur lui-même pour former un empilement d'une électrode, d'un diélectrique et de l'autre électrode de sorte à former un moyen de détection capacitif.

Si on le souhaite, le ou chaque moyen capteur peut comporter en outre un élément flexible sous tension, par exemple un ressort, disposé entre la glissière et une paroi supérieure du boîtier. Cet élément flexible permet d'accroitre la fiabilité du blocage de l'interface tactile sur son support de montage selon la première direction.

Selon une variante, le ou chaque moyen capteur peut comporter en outre un capteur supérieur disposé entre la glissière et une paroi supérieure du boîtier. Outre l'accroissement de la fiabilité du blocage de l'interface tactile sur son support, cette caractéristique offre l'avantage d'ajouter un moyen de détection d'une déformation sur l'interface tactile et donc d'améliorer d'avantage la précision du dispositif.

Si on le souhaite, l'interface tactile peut présenter une forme bombée, voire une forme non développable, de sorte à délimiter une cavité entre le support de montage et l'interface tactile. Ce type de forme permet d'augmenter la rigidité de l'interface tactile.

Avantageusement, l'interface tactile peut présenter des nervures de rigidications. Par exemple, lesdites nervures de rigidifications peuvent être agencées sous la forme d'un nid d'abeilles. De préférence, lesdites nervures de rigidifications peuvent être disposées sur une portion périphérique de l'interface tactile, voire sur deux portions périphériques opposées.

Selon une caractéristique de l'invention, au moins une portion de sortie de l'interface tactile est réalisée en matériau transparent ou translucide de sorte à ce que des rayons lumineux émise par la source lumineuse sortent du dispositif via cette portion de sortie. Selon cette caractéristique, l'interface tactile joue à la fois un rôle de moyen de commande de la source lumineuse et un rôle de surface de sortie de lumière de cette même source lumineuse. Le cas échéant, le dispositif selon l'invention peut comporter un masque supérieur entourant le pourtour de ladite portion de sortie. Le masque supérieur permet ainsi de masquer des composants, comme par exemple des nervures de rigidifications, du dispositif pouvant nuire à son esthétisme.

Selon un mode de réalisation de l'invention, la source lumineuse est disposée entre le support de montage et l'interface tactile au niveau de la portion de sortie. Si on le souhaite, la source lumineuse peut être associé à un moyen optique agencé pour dévier les rayons lumineux émis par cette source lumineuse vers une zone prédéterminée de l'habitacle. Par exemple, le moyen optique peut être un collimateur ou un guide optique agencé pour dévier les rayons lumineux issus de la source lumineuse dans une zone restreinte de l'habitacle de sorte à réaliser une fonction de liseuse.

Le cas échéant, le dispositif peut comprendre un masque inférieur disposé entre la source lumineuse et l'interface tactile, dans lequel le masque inférieur comporte un orifice disposé en vis-à-vis de la source lumineuse ou du moyen optique associé. Cette dernière caractéristique permet de masquer des composants du dispositif, comme par exemple des câbles de connexion électrique de la source lumineuse. Avantageusement, le masque inférieur peut s'étendre sur des dimensions supérieures ou égales à celles de la portion de sortie.

Eventuellement, le masque inférieur peut comporter des moyens de montage de la source lumineuse et/ou du moyen optique associé. Par exemple, la source lumineuse et/ou le moyen optique associé peuvent être montés sur un substrat, par exemple un circuit imprimé, ce substrat étant vissé dans le masque inférieur.

Avantageusement, la source lumineuse comporte une puce semi-conductrice, par exemple une diode électroluminescente, émettrice de lumière blanche. Le cas échéant, le dispositif peut être agencé de sorte qu'un contact sur l'interface tactile au niveau de la portion de sortie déclenche l'émission de lumière blanche par la source lumineuse pour réaliser une fonction de liseuse.

En variante, la source lumineuse peut comporter une puce semi-conductrice, par exemple une diode électroluminescente, émettrice de rayonnement ultraviolet et la portion de sortie peut comporter, au moins au niveau de la source lumineuse des motifs photoluminescents. Ces motifs photoluminescents sont avantageusement réalisés dans un matériau, par exemple fluorescent ou phosphorescent, apte à émettre de la lumière blanche lorsqu'il est soumis à un rayonnement ultraviolet.

Selon un autre mode de réalisation non exclusif de l'invention, la source lumineuse est disposée au niveau d'une extrémité de l'interface tactile de sorte à ce que des rayons lumineux émis par la source lumineuse pénètrent dans l'interface, l'interface tactile étant agencée en guide de lumière pour guider ces rayons lumineux vers la portion de sortie. Le cas échéant, la totalité de l'interface tactile peut être réalisée dans un matériau transparent ou translucide.

Avantageusement, l'interface tactile comporte des moyens de découplage disposés au niveau de la portion de sortion et agencés de sorte à ce que des rayons lumineux se propageant dans l'interface tactile et atteignant ces moyens de découplage sortent de l'interface tactile par la portion de sortie. Ces moyens de découplage peuvent être réalisées sous la forme de prismes diffusants. De préférence, les moyens de découplage peuvent être agencés sous forme d'une ou plusieurs bandes s'étendant sur toute la largeur de l'interface tactile. Le cas échéant, le dispositif peut être agencé de sorte qu'un contact sur l'interface tactile au niveau de la portion de sortie déclenche l'émission de lumière d'une puissance lumineuse prédéterminée par la source lumineuse pour la réalisation d'un éclairage diffus de l'habitacle, la puissance lumineuse étant fonction de la distance séparant le point de contact à la source lumineuse.

Si on le souhaite, la source lumineuse peut comporter une puce semi-conductrice, par exemple une diode électroluminescente, émettrice de lumière blanche. En variante, la source lumineuse peut comporter une diode électroluminescente de type RVB (Rouge-Vert-Bleu) apte à émettre sélectivement et/ou conjointement de la lumière de couleur bleue, rouge ou verte.

Avantageusement, le dispositif peut comporter des première et deuxième sources lumineuses aptes à émettre des rayons lumineux pour l'éclairage dudit habitacle, chacune des sources lumineuses étant sélectivement contrôlée par l'interface tactile. Le cas échéant, lesdites première et deuxième sources peuvent être disposées chacune au niveau d'une extrémité opposée de l'interface tactile, l'interface tactile étant agencée en guide de lumière pour guider les rayons lumineux émis respectivement par les première et deuxième sources lumineuses vers respectivement des première et deuxième portions de sortie distinctes. Dans ce cas, l'interface tactile comporte des premiers et deuxièmes moyens de découplage disposés au niveau respectivement des première et deuxième portions de sortie, les premier et deuxième moyens de découplage étant exclusivement associés aux première et deuxième sources lumineuses. Ces premiers et deuxièmes moyens de découplage peuvent par exemple être réalisés sous la forme de prismes orientés.

Si on le souhaite, le dispositif peut comporter des première, deuxième, troisième et quatrième sources lumineuse aptes à émettre des rayons lumineux pour l'éclairage dudit habitacle selon l'un ou plusieurs des modes de réalisations décrit précédemment, chacune des sources lumineuses étant sélectivement contrôlée par l'interface tactile.

L'invention a également pour objet un véhicule automobile comportant un dispositif d'éclairage de l'habitacle du véhicule selon l'invention.

D'autres caractéristiques et avantages de l'invention apparaîtront à la lecture de la description détaillée qui va suivre et pour la compréhension de laquelle on se reportera aux dessins annexés parmi lesquels :
la figure 1 est une représentation schématique en perspective du dispositif d'éclairage de l'habitacle selon un premier mode de réalisation de l'invention ;
la figure 2 est une représentation schématique et partielle, en vue de dessus, du dispositif de la figure 1 ;
la figure 3 est une représentation schématique et partielle, en coupe, d'un moyen capteur du dispositif de la figure 1 ; et
les figures 4A et 4B sont des représentations schématiques et partielles, en coupe, du dispositif de la figure 1.

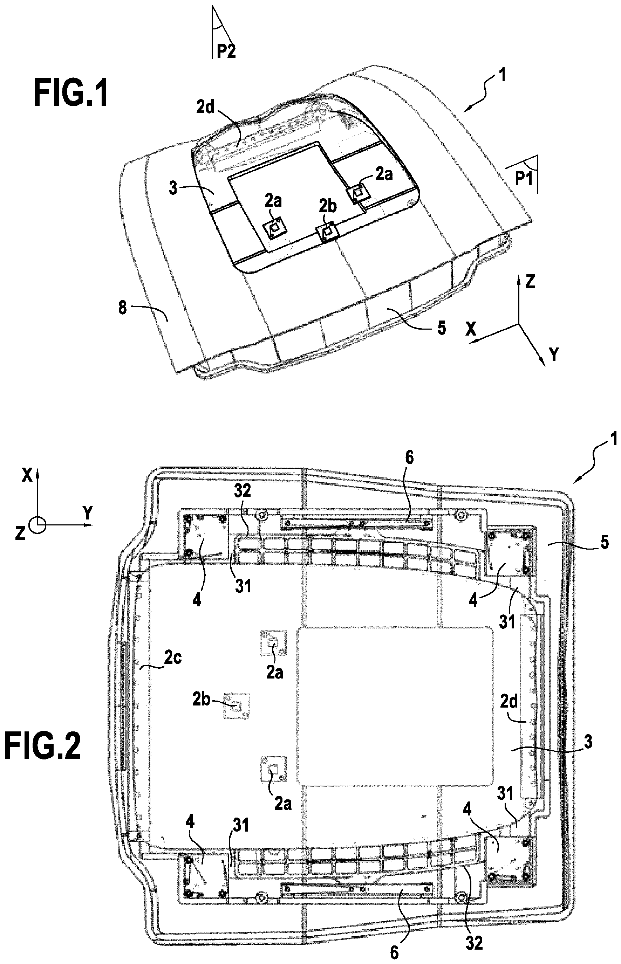

Il est maintenant fait référence aux figures 1 et 2. On a représenté en figure 1 selon une vue en perspective un dispositif d'éclairage 1 d'un habitacle de véhicule automobile. La figure 2 représente une partie de ce dispositif 1 selon une vue de dessus.

Le dispositif 1 comporte des premières, deuxième, troisièmes et quatrièmes sources lumineuses 2a, 2b, 2c et 2d, chacune de ces sources lumineuses étant aptes à émettre des rayons lumineux pour l'éclairage dudit habitacle.

Le dispositif 1 comporte également une interface tactile 3 et quatres moyens capteurs 4 pour détecter un contact sur l'interface tactile et générer un signal caractéristique de ce contact en fonction duquel est pilotée l'une ou plusieurs de ces sources lumineuses 2a à 2d. Le dispositif comporte par ailleurs un masque supérieur 8 disposé au dessus de l'interface tactile 3, uniquement représenté en figure 1.

Le dispositif 1 comprend en outre un contrôleur, non représenté, apte à recevoir des données générées par les moyens capteurs 4 de sorte à compiler ces données notamment pour déterminer la zone de contact sur l'interface tactile 3. Le contrôleur est par ailleurs apte à envoyer aux sources lumineuses 2a à 2d, en fonction de la zone de contact, des instructions d'allumage, d'extinction, de changement d'intensité et/ou de couleur de ces sources lumineuses. La méthode de calcul utilisé par le contrôleur consiste, dans le mode de réalisation représenté, en un calcul de barycentre. Les moyens capteurs 3 sont agencés pour détecter une déformation de l'interface tactile 3 et générer des données relatives à la présence de cette déformation et à son intensité.

Le contrôleur donne à chaque mesure effectué par l'un des moyens capteurs 4 une pondération correspondante à la valeur de déformation de l'interface tactile 3 enregistrée par ces capteurs 4. Une fois ce calcul effectué et la position du contact estimée, le contrôleur est avantageusement programmé pour comparer cette position avec les données géométriques de l'interface tactile 3 enregistrées dans la mémoire du contrôleur. Si la comparaison amène le microprocesseur à estimer que le contact a eu lieu dans une zone prédéterminée associée à l'une des sources lumineuses 2a à 2d de l'interface tactile 3, le microprocesseur génère une instruction d'allumage de cette source lumineuse associée. La suite de l'exposé du mode de réalisation de la figure 1 donnera des exemples d'instruction d'allumage des différentes sources lumineuses 2a à 2d.

L'interface tactile 3 présente une forme bombée de profil non développable ainsi que des nervures de rigidications 32 agencées sous la forme d'un nid d'abeilles et disposées sur deux portions périphériques opposées de l'interface tactile 3.

Le dispositif 1 comporte un support de montage 5 de l'interface tactile 3 dans le véhicule. L'interface tactile 3 est montée sur le support de montage 5 par l'intermédiaire des moyens capteurs 4, chacun des moyens capteurs étant monté sur une portion périphérique 31 de l'interface tactile 3 s'étendant depuis l'un de ses bord.

Le dispositif 1 comporte également deux lames flexibles 6 formant des moyens de blocage de mouvements de l'interface tactile sur son support de montage selon deux directions x et y orthogonales entre elles et correspondant globalement aux directions d'extensions du support de montage 5. Chaque lame flexible 6 peut être fixée à un bord de l'interface tactile 3 via une portion centrale de la lame 6 et au support de montage 5 via chacune de ses extrémités.

Les moyens capteurs 4 sont aptes à bloquer des mouvements de l'interface tactile 3 sur son support de montage 5 selon une direction z orthogonale aux directions x et y et selon laquelle l'interface tactile se déforme lors d'un contact.

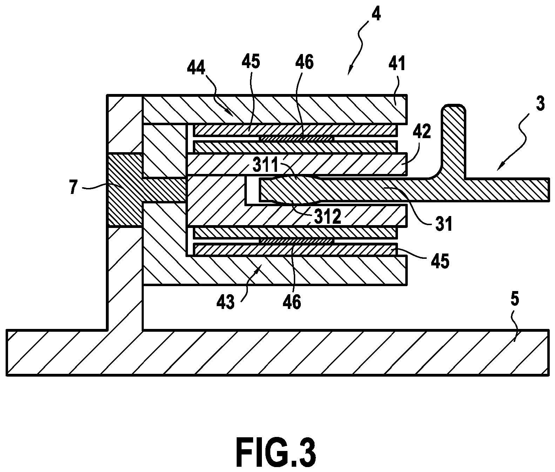

On se réfère à cet effet à la figure 3 qui représente en coupe l'un de ces moyens capteurs 4, une portion 31 de l'interface tactile 3 sur laquelle il est monté et un partie du support de montage 5 sur laquelle est monté le capteur. Par la suite, seul l'un de ces moyens capteurs 4 sera décrit, étant entendu que dans le mode de réalisation illustré par les figures 1 et 2, tous les moyens capteurs 4 sont identiques.

Le moyen capteur 4 comporte un boîtier 41 comprenant un orifice placé en vis-à-vis d'un orifice d'une excroissance du support de montage 5, un moyen de fixation telle qu'une vis 7 étant inséré dans ces orifices pour fixer le boîtier 41 au support de montage 5. Une glissière 42 est disposée dans le boîtier 41. La portion périphérique 31 de l'interface tactile 3 est insérée dans la glissière 42. Cette portion périphérique 31 comporte un bossage supérieur 311 agencé pour venir au contact et déformer la paroi supérieure de la glissière 42 et un bossage inférieur 312 agencé pour venir au contact et déformer la paroi inférieure de la glissière 42.

Le moyen capteur 4 comporte un capteur inférieur 43 disposé entre la glissière et la paroi inférieure du boîtier 41 et un capteur supérieur 44 disposé entre la glissière et la paroi supérieure du boîtier 41. Chacun des capteurs inférieur 43 et supérieur 44 comporte un circuit imprimé flexible 45 comprenant des moyens de détection, par exemple de type capacitifs ou résistifs, d'une déformation sur l'interface tactile 3, le circuit imprimé flexible 45 étant replié sur lui-même et de la mousse 46 étant insérée dans l'espace entre les deux parties du circuit imprimé 45.

On comprend ainsi que la structure du moyen capteur 4, à savoir la glissière déformable 42 et la mousse 46 des capteurs 43 et 44, permet de s'assurer que les capteurs 43 et 44 soient toujours en contact avec la portion périphérique 31 et que des mouvements de l'interface tactile 3 selon la direction z vis-à-vis du moyen capteur 4, et donc du support de montage 5, soient interdits par le moyen capteur 4. L'interface tactile 3 étant donc bloquée dans la direction z, c'est-à-dire la direction principale des déformations provoquées par les contacts, seule une déformation liée à un contact peut donner lieu à une détection d'un contact.

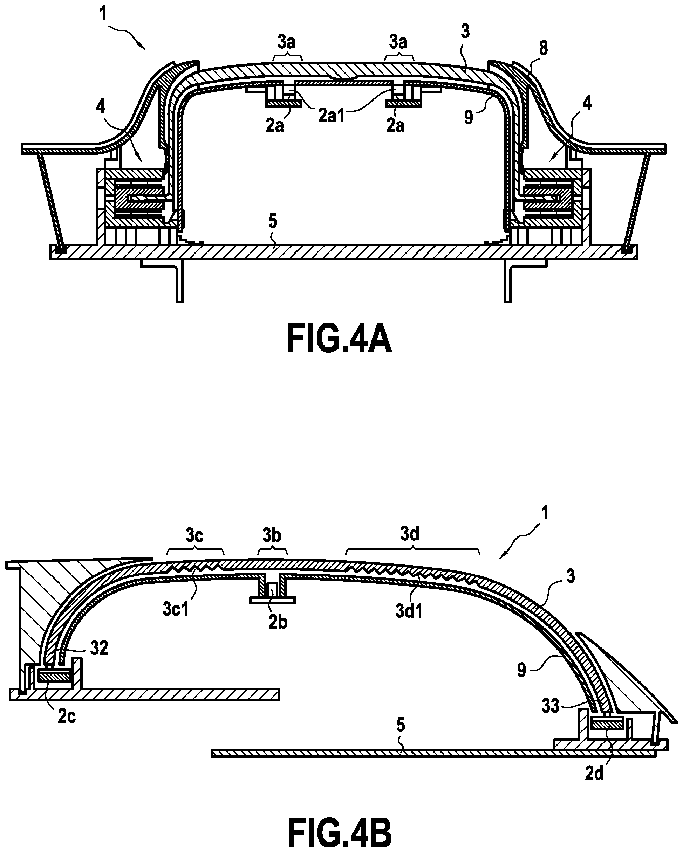

Il est maintenant fait référence aux figures 4a et 4b qui représente le dispositif de la figure 1 selon des vues en coupes par des plans respectivement P1 et P2.

La totalité de l'interface tactile 3 est réalisée dans un matériau transparent ou translucide de sorte à ce que l'interface tactile 3 comporte des portions de sortie de lumière 3a, 3b, 3c et 3d, chacune des portions de sortie étant associée à l'une des sources lumineuses respectivement 2a, 2b, 2c et 2d de sorte à ce que des rayons lumineux émise par l'une de ces sources lumineuses sortent du dispositif via sa portion de sortie associée. Le masque supérieur 8 est agencé de sorte à entourer le pourtour de l'ensemble des portions de sortie 3a, 3b, 3c et 3d.

Le premier ensemble de sources lumineuses 2a comporte deux sources lumineuses 2a chacune disposées entre le support de montage 5 et l'interface tactile 3 au niveau d'une portion de sortie 3a de forme réduite comparativement à l'étendue de l'interface tactile .

Chaque source lumineuse 2a est une diode électroluminescente apte à émettre de la lumière de couleur blanche et est associé à un collimateur 2a1 agencé pour dévier les rayons lumineux émis par cette source lumineuse 2a vers une zone prédéterminée restreinte de l'habitacle de sorte à réaliser une fonction de liseuse. Le contrôleur du dispositif 1 est agencé de sorte qu'à la détection d'un contact sur l'interface tactile au niveau de la portion de sortie 3a, ce contrôleur génère une instruction d'allumage ou d'extinction de la source lumineuse 2a associée de façon à ce que cette source lumineuse émette de la lumière si elle est éteinte ou arrête l'émission de lumière si elle est allumée.

La source lumineuse 2b est également disposée entre le support de montage 5 et l'interface tactile 3 au niveau d'une portion de sortie 3b de forme réduite comparativement à l'étendue de l'interface tactile 3.

La source lumineuse 2b comporte une une diode électroluminescente apte à émettre un rayonnement ultraviolet. La portion de sortie 3b comporte des motifs photoluminescents réalisés dans un matériau fluorescent apte à émettre de la lumière blanche lorsqu'il est soumis à un rayonnement ultraviolet. On comprend ainsi que le rayonnement ultraviolet émis par la source lumineuse 2b atteindra les motifs photoluminescents en entrainant l'émission de lumière blanche pour la réalisation d'une fonction liseuse. Le contrôleur du dispositif 1 est agencé de sorte qu'à la détection d'un contact sur l'interface tactile au niveau de la portion de sortie 3b, ce contrôleur génère une instruction d'allumage ou d'extinction de la source lumineuse 2b de façon à ce que cette source lumineuse émette un rayonnement ultraviolet si elle est éteinte ou arrête l'émission de ce rayonnement si elle est allumée.

Le dispositif comprend un masque inférieur 9 s'étendant sur les mêmes dimensions que l'interface tacile 3 et disposé entre les sources lumineuses 2a et 2b et l'interface tactile 3. Le masque inférieur 9 comporte des orifices disposés en vis-à-vis de la source lumineuse 2b et des collimateurs 2a1.

Chaque source lumineuse 2a et 2b ainsi que les collimateurs 2a1 sont montés sur un circuit imprimé fixé au masque inférieur.

Les sources lumineuses 2c sont des diodes électroluminescentes aptes à émettre de la lumière de couleur blanche et sont disposées sur un même circuit imprimé au niveau d'une extrémité 32 de l'interface tactile 3 de sorte à ce que des rayons lumineux émis par chacune de ces sources lumineuses 2c pénètrent dans l'interface tactile. L'interface tactile est ainsi agencée en guide de lumière pour guider ces rayons lumineux, via réflexion interne totale de ces rayons lumineux sur ses parois internes, vers la portion de sortie 3c.

L'interface tactile 3 comporte des prismes de découplage 3c1 disposés en bande au niveau de la portion de sortion 3c et orientés de sorte à ce que des rayons lumineux émis par les sources lumineuses 2c se propageant dans l'interface tactile 3 et atteignant ces moyens de découplage 3c1 sortent de l'interface tactile 3 par la portion de sortie 3c.

Le contrôleur du dispositif 1 est agencé de sorte qu'un contact sur l'interface tactile 3 au niveau de la portion de sortie 3c déclenche l'émission de lumière d'une puissance lumineuse prédéterminée par les sources lumineuses 2c pour la réalisation d'un éclairage diffus dans l'habitacle. Cette puissance lumineuse prédéterminée est fonction de la distance séparant le point de contact aux sources lumineuses 2c. Par exemple, un contact sur l'interface tactile sur une zone au plus proche des sources lumineuses 2c déclenchera une instruction d'extinction des sources lumineuses 2c et tandis qu'un contact sur l'interface tactile sur une zone éloignée des sources lumineuses déclanchera une instruction d'allumage des sources lumineuses 2c pour l'émission dune puissance lumineuse maximale.

Les sources lumineuses 2d sont des diodes électroluminescentes de type RVB aptes à émettre sélectivement et/ou conjointement de la lumière de couleur bleue, rouge ou verte. Ces sources lumineuses 2d sont disposées sur un même circuit imprimé au niveau d'une extrémité 33 de l'interface tactile 3 de sorte à ce que des rayons lumineux émis par chacune de ces sources lumineuses 2d pénêtrent dans l'interface tactile et y soient guidés vers la portion de sortie 3d.

L'interface tactile 3 comporte des prismes de découplage 3d1 disposés en bande au niveau de la portion de sortion 3d et orientés de sorte à ce que des rayons lumineux émis par les sources lumineuses 2d se propageant dans l'interface tactile 3 et atteignant ces moyens de découplage 3d1 sortent de l'interface tactile 3 par la portion de sortie 3d.

Les prismes de découplage 3c1 et 3d1 sont exclusivement associés aux sources lumineuses respectivement 2c et 2d, de sorte à ce que des rayons lumineux émis par l'une de ces sources, par exemple 2c, et atteignant des prismes associés à l'autre de ces sources, par exemple 3d1, gardent le même trajet sans être déviés par ces prismes vers l'extérieur de la portion de sortie, par exemple 3d.

La description qui précède explique clairement comment l'invention permet d'atteindre les objectifs qu'elle s'est fixés et notamment de proposer un dispositif d'éclairage de l'habitacle d'un véhicule pour l'éclairage intérieur de celui-ci utilisant une interface tactile et qui soit compact, simple à fabriquer tout en offrant des performances optimales.

Toutefois, l'invention n'est pas limitée au seul dispositif conforme au mode de réalisation explicitement décrit en regard des figures 1 à 4d, ni seulement à une application déterminée. A titre d'exemple, on pourra, sans sortir du cadre de l'invention défini par les revendications,
modifier le nombre et la disposition des sources lumineuses, le nombre, la disposition voire la structure des moyens capteurs.

## Revendications

1. Dispositif d'éclairage (1) d'un habitacle de véhicule automobile, comportant au moins :
- une ou plusieurs sources lumineuses (2a,2b,2c,2d) aptes à émettre des rayons lumineux pour l'éclairage dudit habitacle,
- une interface tactile (3) ainsi que des moyens capteurs (4) pour détecter un contact sur l'interface tactile et générer un signal caractéristique de ce contact en fonction duquel est pilotée la ou les sources lumineuses, et
- un support de montage (5) de l'interface tactile dans le véhicule, le dispositif étant **caractérisé en ce que** l'interface tactile est montée sur le support de montage par l'intermédiaire des moyens capteurs et **en ce que** le dispositif comporte au moins trois moyens capteurs (4) aptes à bloquer des mouvements de l'interface tactile (3) sur son support de montage (5) selon une première direction (z).

2. Dispositif (1) selon la revendication 1, dans lequel au moins l'un des moyens capteurs (4) est en outre apte à bloquer des mouvements de l'interface tacile (3) sur son support de montage (5) selon des deuxième et troisième directions (x,y) orthogonales entre elles et à la première direction (z).

3. Dispositif (1) selon l'une des revendications 1 ou 2, le dispositif comportant en outre au moins un moyen de blocage (6) de mouvements de l'interface tactile (3) sur son support de montage (5) selon des deuxième et troisième directions (x,y) orthogonales entre elles et à la première direction (z).

4. Dispositif (1) selon la revendication 3, dans lequel le moyen de blocage comporte une lame flexible (6) fixée à la fois à l'interface tactile (3) et au support de montage (5).

5. Dispositif (1) selon l'une des revendications 1 à 4, dans lequel au moins un ou chaque moyen capteur (4) comporte une glissiere (42) dans laquelle est inséré une portion périphérique (31) de l'interface (3).

6. Dispositif (1) selon la revendication 5, dans lequel la ou chaque portion périphérique (31) comporte un bossage (311, 312) agencé pour venir au contact et déformer une paroi de la glissière (42) dans laquelle elle est insérée.

7. Dispositif (1) selon l'une des revendications 5 ou 6, dans lequel le ou chaque moyen capteur (4) comporte un boîtier (41) dans lequel est disposée sa glissière (42), ce moyen capteur comportant un capteur inférieur (43) disposé entre la glissière et une paroi inférieur du boîtier.

8. Dispositif (1) selon la revendication 7, dans lequel le ou chaque moyen capteur (4) comporte en outre un élément flexible disposé entre la glissière (42) et une paroi supérieure du boîtier (41).

9. Dispositif (1) selon la revendication 7, dans lequel le ou chaque moyen capteur (4) comporte en outre un capteur supérieur (44) disposé entre la glissière (42) et une paroi supérieure du boîtier (41).

10. Dispositif (1) selon l'une des revendications 1 à 9, dans lequel au moins une portion de sortie (3a,3b,3c,3d) de l'interface tactile (3) est réalisée en matériau transparent ou translucide de sorte à ce que des rayons lumineux émis par la source lumineuse (2a,2b,2c,3d) sortent du dispositif via cette portion de sortie.

11. Dispositif (1) selon la revendication 10, dans lequel la source lumineuse (2a,2b) est disposée entre le support de montage (5) et l'interface tactile (3) au niveau de la portion de sortie (3a,3b).

12. Dispositif (1) selon l'une des revendications 10 ou 11, dans lequel la source lumineuse (2c,2d) est disposée au niveau d'une extrémité (32,33) de l'interface tactile (3) de sorte à ce que des rayons lumineux émis par la source lumineuse (2c,2d) pénêtrent dans l'interface tactile, l'interface tactile étant agencée en guide de lumière pour guider ces rayons lumineux vers la portion de sortie (3c,3d).

13. Dispositif (1) selon la revendication 12, dans lequel l'interface tactile (3) comporte des moyens de découplage (3c1,3d1) disposés au niveau de la portion de sortie (3c,3d) et agencés de sorte à ce que des rayons lumineux se propageant dans l'interface tactile et atteignant ces moyens de découplage sortent de l'interface tactile par la portion de sortie.

14. Véhicule automobile comportant un dispositif (1) d'éclairage de l'habitacle de ce véhicule selon l'une des revendications précédentes.

## Patentansprüche

1. Vorrichtung zur Beleuchtung (1) eines Kraftfahrzeuginnenraums, aufweisend wenigstens:
- eine oder mehrere Lichtquellen (2a, 2b, 2c, 2d), die geeignet sind, Lichtstrahlen zur Beleuchtung des Innenraums auszusenden,
- eine Berührungsschnittstelle (3) sowie Sensormittel (4) zur Erkennung eines Kontakts auf der Berührungsschnittstelle und Erzeugung eines charakteristischen Signals für diesen Kontakt, anhand dessen die Lichtquelle(n) gesteuert wird, und
- einen Halter zur Montage (5) der Berührungsschnittstelle im Fahrzeug,
wobei die Vorrichtung **dadurch gekennzeichnet ist, dass** die Berührungsschnittstelle mittels der Sensormittel am Montagehalter angebracht ist, und dadurch, dass die Vorrichtung wenigstens drei Sensormittel (4) aufweist, die geeignet sind, Bewegungen der Berührungsschnittstelle (3) auf ihrem Montagehalter (5) in einer ersten Richtung (z) zu blockieren.

2. Vorrichtung (1) nach Anspruch 1, wobei wenigstens eins der Sensormittel (4) ferner geeignet ist, Bewegungen der Berührungsschnittstelle (3) auf ihrem Montagehalter (5) in einer zweiten und dritten Richtung (x, y), die orthogonal zueinander und zur ersten Richtung (z) verlaufen, zu blockieren.

3. Vorrichtung (1) nach einem der Ansprüche 1 oder 2, wobei die Vorrichtung ferner wenigstens ein Mittel zur Blockierung (6) von Bewegungen der Berührungsschnittstelle (3) auf ihrem Montagehalter (5) in einer zweiten und dritten Richtung (x, y), die orthogonal zueinander und zur ersten Richtung (z) verlaufen, aufweist.

4. Vorrichtung (1) nach Anspruch 3, wobei das Blockiermittel einen flexiblen Streifen (6) aufweist, der sowohl an der Berührungsschnittstelle (3) als auch am Montagehalter (5) befestigt ist.

5. Vorrichtung (1) nach einem der Ansprüche 1 bis 4, wobei wenigstens ein oder jedes Sensormittel (4) eine Gleiteinrichtung (42) aufweist, in die ein Randabschnitt (31) der Schnittstelle (3) eingeführt ist.

6. Vorrichtung (1) nach Anspruch 5, wobei der oder jeder Randabschnitt (31) eine Erhebung (311, 312) aufweist, die angeordnet ist, mit einer Wand der Gleiteinrichtung (42), in die er eingeführt ist, in Kontakt zu treten und sie zu verformen.

7. Vorrichtung (1) nach einem der Ansprüche 5 oder 6, wobei das oder jedes Sensormittel (4) ein Gehäuse (41) aufweist, in dem seine Gleiteinrichtung (42) angeordnet ist, wobei dieses Sensormittel einen unteren Sensor (43) aufweist, der zwischen der Gleiteinrichtung und einer unteren Wand des Gehäuses angeordnet ist.

8. Vorrichtung (1) nach Anspruch 7, wobei das oder jedes Sensormittel (4) ferner ein flexibles Element aufweist, das zwischen der Gleiteinrichtung (42) und einer oberen Wand des Gehäuses (41) angeordnet ist.

9. Vorrichtung (1) nach Anspruch 7, wobei das oder jedes Sensormittel (4) ferner einen oberen Sensor (44) aufweist, der zwischen der Gleiteinrichtung (42) und einer oberen Wand des Gehäuses (41) angeordnet ist.

10. Vorrichtung (1) nach einem der Ansprüche 1 bis 9, wobei wenigstens ein Austrittsabschnitt (3a, 3b, 3c, 3d) der Berührungsschnittstelle (3) aus transparentem oder durchscheinendem Material hergestellt ist, so dass Lichtstrahlen, die von der Lichtquelle (2a, 2b, 2c, 3d) ausgesendet werden, über diesen Austrittsabschnitt aus der Vorrichtung austreten.

11. Vorrichtung (1) nach Anspruch 10, wobei die Lichtquelle (2a, 2b) zwischen dem Montagehalter (5) und der Berührungsschnittstelle (3) am Austrittsabschnitt (3a, 3b) angeordnet ist.

12. Vorrichtung (1) nach einem der Ansprüche 10 oder 11, wobei die Lichtquelle (2c, 2d) an einem Ende (32, 33) der Berührungsschnittstelle (3) angeordnet ist, so dass Lichtstrahlen, die von der Lichtquelle (2c, 2d) ausgesendet werden, in die Berührungsschnittstelle eindringen, wobei die Berührungsschnittstelle als Lichtleiter angeordnet ist, um diese Lichtstrahlen zum Austrittsabschnitt (3c, 3d) zu leiten.

13. Vorrichtung (1) nach Anspruch 12, wobei die Berührungsschnittstelle (3) Entkopplungsmittel (3c1, 3d1) aufweist, die am Austrittsabschnitt (3c, 3d) angeordnet und so eingerichtet sind, dass sich Lichtstrahlen, die sich in der Berührungsschnittstelle ausbreiten und diese Entkopplungsmittel erreichen, über den Austrittsabschnitt aus der Berührungsschnittstelle austreten.

14. Kraftfahrzeug aufweisend eine Vorrichtung (1) zur Beleuchtung des Innenraums dieses Fahrzeugs nach einem der vorhergehenden Ansprüche.

## Claims

1. Lighting device (1) for a motor vehicle interior, comprising at least:
- one or more light sources (2a, 2b, 2c, 2d) capable of emitting light rays for lighting of said interior,
- a touch interface (3) and sensor means (4) for detecting a contact on the touch interface and generating a signal characteristic of this contact according to which the light source or sources is/are controlled, and
- a mounting support (5) for the touch interface in the vehicle,
the device being **characterized in that** the touch interface is mounted on the mounting support via the sensor means, and **in that** the device comprises at least three sensor means (4) capable of blocking movements of the touch interface (3) on its mounting support (5) in a first direction (z).

2. Device (1) according to Claim 1, wherein at least one of the sensor means (4) is also capable of blocking movements of the touch interface (3) on its mounting support (5) in second and third directions (x, y) that are orthogonal to one another and to the first direction (z).

3. Device (1) according to one of Claims 1 and 2, the device further comprising at least one means (6) for blocking movements of the touch interface (3) on its mounting support (5) in second and third directions (x, y) that are orthogonal to one another and to the first direction (z).

4. Device (1) according to Claim 3, wherein the blocking means comprises a flexible blade (6) fixed both to the touch interface (3) and to the mounting support (5).

5. Device (1) according to one of Claims 1 to 4, wherein at least one or each sensor means (4) comprises a guideway (42) into which is inserted a peripheral portion (31) of the interface (3).

6. Device (1) according to Claim 5, wherein the or each peripheral portion (31) comprises a boss (311, 312) arranged to come into contact with and deform a wall of the guideway (42) into which it is inserted.

7. Device (1) according to one of Claims 5 and 6, wherein the or each sensor means (4) comprises a housing (41) in which is arranged its guideway (42), this sensor means comprising a bottom sensor (43) arranged between the guideway and a bottom wall of the housing.

8. Device (1) according to Claim 7, wherein the or each sensor means (4) further comprises a flexible element arranged between the guideway (42) and a top wall of the housing (41).

9. Device (1) according to Claim 7, wherein the or each sensor means (4) further comprises a top sensor (44) arranged between the guideway (42) and a top wall of the housing (41).

10. Device (1) according to one of Claims 1 to 9, wherein at least one output portion (3a, 3b, 3c, 3d) of the touch interface (3) is produced in a transparent or translucent material such that light rays emitted by the light source (2a, 2b, 2c, 3d) exit from the device via this output portion.

11. Device (1) according to Claim 10, wherein the light source (2a, 2b) is arranged between the mounting support (5) and the touch interface (3) at the level of the output portion (3a, 3b).

12. Device (1) according to one of Claims 10 and 11, wherein the light source (2c, 2d) is arranged at the level of an end (32, 33) of the touch interface (3) such that light rays emitted by the light source (2c, 2d) penetrate into the touch interface, the touch interface being arranged as a light guide to guide these light rays to the output portion (3c, 3d) .

13. Device (1) according to Claim 12, wherein the touch interface (3) comprises decoupling means (3c1, 3dl) arranged at the level of the output portion (3c, 3d) and arranged such that light rays being propagated in the touch interface and reaching these decoupling means exit from the touch interface through the output portion.

14. Motor vehicle comprising a device (1) for lighting the interior of this vehicle according to one of the preceding claims.
